# FASCICULE DE BREVET EUROPEEN

(11) **EP 3 572 157 B1**
(45) Date de publication et mention de la délivrance du brevet: **29.07.2020**
(21) Numéro de dépôt: 19176133.7
(22) Date de dépôt: 23.05.2019
(51) Int. Cl.: B07C 3/20, B64F 1/36

(54) **PROCEDE DE TRI BAGAGE EN AEROPORT AVEC VIDEOCODAGE OPTIMISE**
GEPÄCKSORTIERVERFAHREN AM FLUGHAFEN MIT OPTIMIERTER VIDEOKODIERUNG
METHOD FOR SORTING LUGGAGE IN AIRPORTS WITH OPTIMISED VIDEOCODING

(30) Priorité: 24.05.2018 FR 1870601
(43) Date de publication de la demande: 27.11.2019
(73) Titulaire: Solystic, 92220 Bagneux (FR)
(72) Inventeur: PIEGAY, Emmanuel, 75010 Paris (FR); FLOURY, Alexa, 75013 Paris (FR); EL BERNOUSSI, Hicham, 75015 Paris (FR)
(74) Mandataire: Prugneau, Philippe

(56) Documents cités:
- WO-A1-2017/137106
- DE-C1- 19 742 771
- DE-C1- 19 748 702
- DE-U1-202015 006 102

## Description

### Domaine technique

Procédé de tri de bagages dans un aéroport, comprenant une acquisition d'une pluralité d'images numériques d'un bagage à partir de différents points de vue, ce bagage portant une étiquette d'identification univoque comportant des informations textuelles sur un vol aérien.

### Technique antérieure

Un tel type de procédé est décrit dans la demande de brevet WO 2017/137106 qui divulgue un procédé dans lequel des bagages sont munis d'une étiquette d'identification comportant des lignes d'informations textuelles et un code-barres, ce dernier permettant d'associer de façon univoque chaque bagage à un ensemble de données enregistrées dans une base de données de bagages construite au fur et à mesure de l'enregistrement des bagages.

Ainsi, la lecture du code-barres ou l'extraction d'informations textuelles par un système informatique basée sur une analyse de reconnaissance de caractères, dite analyse OCR, permet de suivre et d'orienter un bagage dans un système de convoyage automatisé dans l'aéroport de départ comme dans l'aéroport d'arrivée, les informations pertinentes de la base de données étant transmises aux aéroports concernés.

Selon le document WO 2017/137106, l'extraction d'informations textuelles intervient en cas de difficulté ou d'impossibilité de lecture automatique du code-barres. Cette difficulté intervient par exemple en cas d'étiquette salie ou endommagée, et l'extraction est basée sur la comparaison entre les éléments textuels reconnus de l'étiquette et les données enregistrées dans la base de données de bagages.

En revanche, WO 2017/137106 ne répond pas aux problèmes liés à l'impossibilité de procéder à une analyse OCR satisfaisante et/ou d'accéder aux données de la base de données de bagages.

Le document DE 20 2015 006 102 décrit un procédé de tri de bagages dans un aéroport, comprenant l'acquisition d'une pluralité d'images d'un bagage et un vidéo-codage pour afficher les images sur un écran, mais ce procédé peut être amélioré.

### Exposé de l'invention

A ces effets, l'invention a pour objet un procédé de tri de bagages dans un aéroport, comprenant une acquisition d'une pluralité d'images numériques d'un bagage à partir de différents points de vue, ce bagage portant une étiquette d'identification univoque indiquant des informations textuelles sur un vol aérien, et comprenant en outre un vidéo-codage dans lequel une unité informatique détecte automatiquement la présence d'éléments caractéristiques de l'étiquette d'identification univoque dans les images numériques du bagage, calcule un score pour chacune de ces images numériques sur la base d'un comptage des éléments caractéristiques détectés dans chaque image, classe les images numériques en fonction de leurs scores respectifs et affiche celles-ci sur un écran en fonction de ce classement.

L'affichage des images numériques en fonction de leur classement a pour effet d'accélérer l'entrée des données par l'opérateur sur le poste de vidéo-codage.

De cette manière, une sélection et une présentation automatiques d'images pertinentes de bagages simplifient le travail de l'opérateur dans sa prise de décision quant à l'identification de provenance ou de destination du bagage à trier, ce qui augmente considérablement la vitesse de tri du bagage en cas d'impossibilité d'opérer un tri entièrement automatisé.

Le procédé selon l'invention peut avantageusement présenter les particularités suivantes :
- l'unité informatique peut opérer une sélection des images sur la base de leurs scores respectifs et afficher sur écran en premier les images de la sélection à l'opérateur ;
- l'unité informatique peut afficher à l'écran les images de la sélection de manière simultanée ;
- l'unité informatique peut afficher à l'écran les images de la sélection de manière séquentielle sur la base de leurs scores respectifs ;
- l'unité informatique peut afficher à l'écran un agrandissement d'une zone d'intérêt comprenant un élément caractéristique détecté dans une des images numériques ;
- les éléments caractéristiques peuvent être choisis parmi les éléments caractéristiques sont choisis parmi un code-barres, un code IATA d'aéroport, un numéro de vol et une date d'un vol ;
- on peut utiliser des informations récupérées dans une base de données pour calculer les scores ;
- l'unité informatique peut afficher en outre à l'écran des informations récupérées dans une base de données de vols aériens parmi lesquelles un opérateur choisit les informations qu'il entre dans l'unité informatique ; et
- l'unité informatique affiche en outre à l'écran des informations récupérées dans une base de données de bagages parmi lesquelles un opérateur choisit les informations qu'il entre dans l'unité informatique.

Ainsi, la sélection et l'affichage des images numériques du bagage peuvent être optimisés sur la base de critères pertinents pour le tri du bagage afin de faciliter et d'accélérer l'identification de ce bagage par un opérateur humain.

En outre, la décision par l'opérateur humain peut se baser sur le contenu d'une base de données de vols, qui peut être d'accès et de contenu robustes puisque pouvant être locale et préparée à l'avance, et être indépendante d'une base de données de bagages distante et construite au fur et à mesure de l'enregistrement des bagages.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1A illustre un bagage convoyé au niveau d'un portique équipé de caméras dans un aéroport ;
- les figures 1B et 1C illustrent un procédé de vidéo-codage selon l'invention ;
- la figure 2A illustre une étiquette d'identification accrochée au bagage de la figure 1A, et les figures 2B à 2D des images de bagages utilisées dans le procédé des figures 1B et 1C ;
- la figure 3A illustre des aéroports et des bases de données associées ; et
- les figures 3B et 3C sont des diagrammes fonctionnels d'un procédé de tri selon l'invention.

### Description d'un mode de réalisation

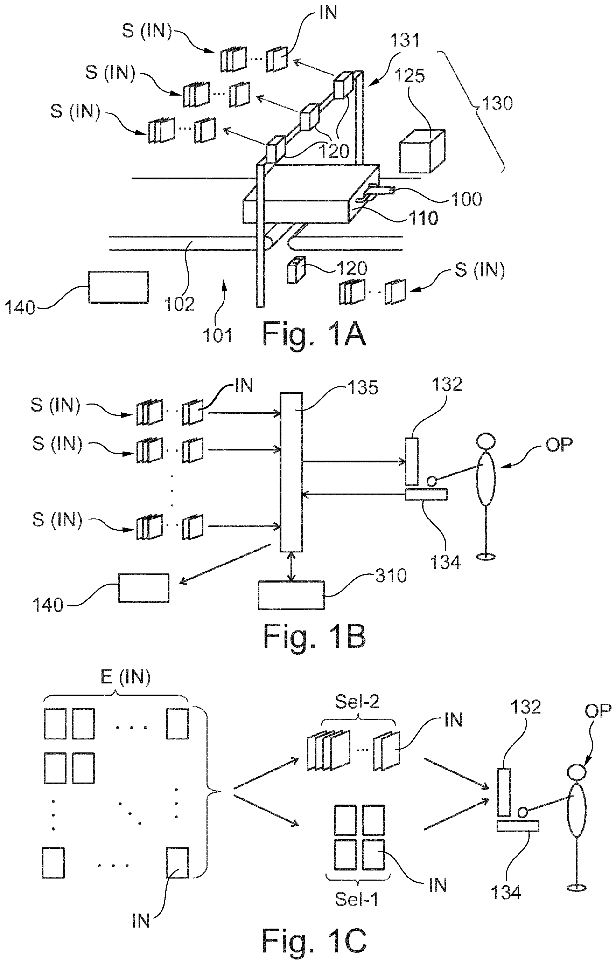

Un procédé de tri de bagage en aéroport selon l'invention est illustré par les figures 1A à 3C.

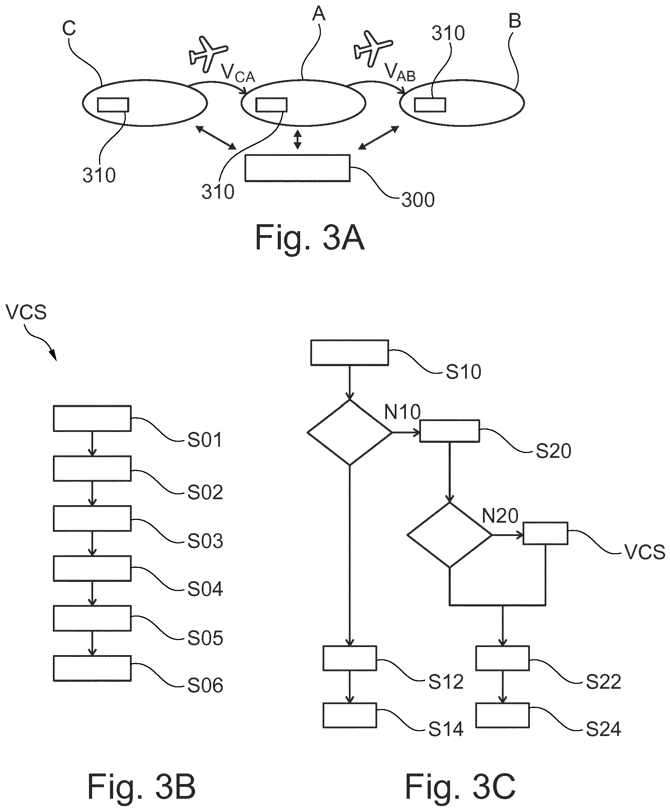

Lors d'un voyage par avion d'un aéroport A à un aéroport B ou d'un aéroport C à l'aéroport A, respectivement V_{AB} et V_{CA} comme illustré en figure 3A, un bagage convoyé au sein de l'aéroport A est identifié à l'aide d'une étiquette 100 d'identification univoque accrochée à celui-ci.

L'étiquette porte un code-barres et est éditée au moment de l'enregistrement du bagage de manière à associer au code-barres un ensemble d'informations concernant le bagage, telles qu'un numéro de vol, une compagnie aérienne ou un numéro d'enregistrement, enregistrées dans une base de données (300) de bagages créée au fur et à mesure de l'enregistrement de bagages dans un aéroport de départ puis transmises entre aéroports concernés au moyen d'un réseau informatique.

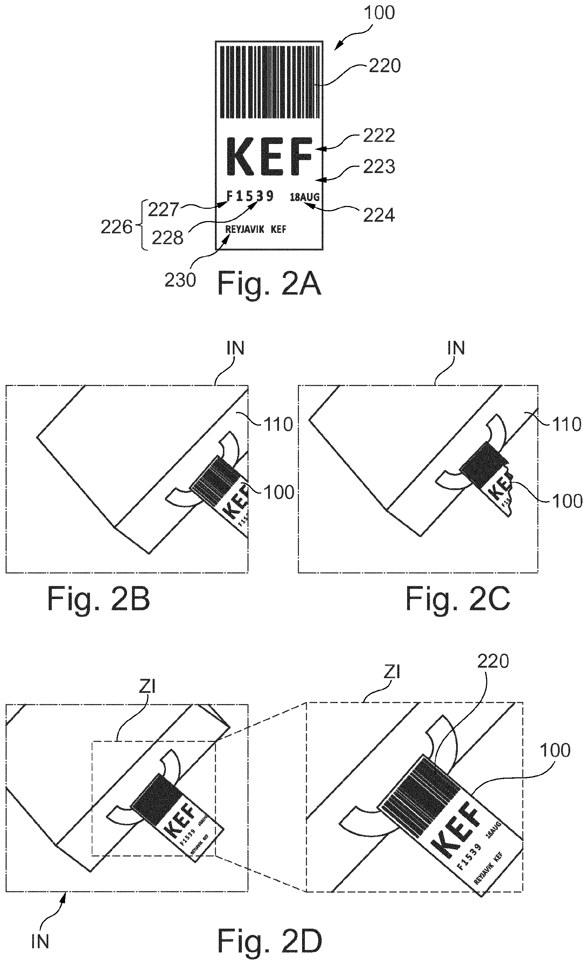

Cette étiquette 100 porte, en plus du code-barres 220, des informations textuelles pouvant être utiles au suivi du bagage et à son orientation vers sa destination, telles qu'un code IATA d'aéroport composé d'un trigramme 222 correspondant à un aéroport et un numéro de vol 226 composé d'un nom codé 127 d'une compagnie aérienne et d'un numéro de vol 228 interne à la compagnie, une date 224 et une ville 230 comme illustré par la figure 2A.

Selon le présent mode de réalisation, le bagage 110 est transporté au sein d'un aéroport par un convoyeur 102 d'un système de convoyage 101 commandé par une unité de tri automatique 140 et passe au niveau d'un système d'identification 130 comprenant un dispositif de lecture 125 du codes-barres 220 de l'étiquette 100 en vue d'un tri de ce bagage en fonction des données associées au code-barres dans la base de données 300 de bagages.

Le système d'identification 130 comporte en outre un portique 131 équipé de plusieurs caméras 120 agencées de manière à acquérir des images numériques IN du bagage 110 sous différents angles de vue afin de maximiser les chances d'avoir des images exploitables de l'étiquette 100.

En cas d'échec de tri du bagage par lecture automatique (lecture de son code-barres 220 ou lecture OCR des informations textuelles), on peut utiliser les images numériques IN pour procéder à un tri par vidéo-codage dans lequel les images numériques sont présentées à un opérateur humain qui identifie et entre manuellement dans un système informatique des informations qui correspondent aux informations textuelles de l'étiquette afin d'orienter le bagage dans le système de convoyage 101.

Un portique peut comporter, par exemple, dix caméras qui acquièrent chacune une série S(IN) de, par exemple, dix images numériques IN du bagage, et peut donc produire un ensemble E(IN) de cent images numériques IN susceptibles d'être présentées à l'opérateur humain Op.

Un tel nombre d'images garantit avec un haut niveau de certitude la présence d'au moins une image numérique permettant à l'opérateur de prendre une décision sur les informations qu'il doit entrer manuellement, mais, en l'absence d'optimisation dans la présentation des images, il peut lui être nécessaire d'en visualiser un grand nombre avant d'en trouver une sur laquelle l'étiquette du bagage est présente et lisible.

En effet, l'étiquette peut être mise hors de vue de certaines des caméras par le bagage lui-même, par exemple si elle se trouve sous ce dernier, et, à supposer qu'elle soit visible, son orientation peut la rendre illisible sur la majorité de ces images numériques.

De plus, une étiquette peut n'être que partiellement visible sur une image numérique IN, ou encore être détériorée, comme dans les figures 2B et 2C.

Ainsi, chaque image numérique IN prise individuellement a de bonnes chances d'être inexploitable pour le tri par vidéo-codage.

Selon l'invention, une unité informatique 135 ordonne les images numériques afin d'assister l'opérateur humain chargé du vidéo-codage en lui présentant en priorité les images les plus susceptibles de contenir des informations utiles au vidéo-codage.

Dans une première étape S01 du vidéo-codage VCS illustré par les figures 1B, 1C et 3B, l'unité informatique 135 collecte l'ensemble E(IN) des images numériques acquises par les caméras 120 au cours d'une étape S01, puis effectue automatiquement, pour chacune des images numériques, une analyse logicielle de recherche d'éléments caractéristiques de l'étiquette 100 d'identification au cours d'une étape S02, manière à y détecter la présence, ou l'absence, de ces éléments caractéristiques.

L'absence de l'un quelconque de ces éléments caractéristiques dans une image se déduit d'une détection négative de cet élément, c'est-à-dire d'une absence de détection de cet élément en dépit de l'analyse logicielle de recherche.

Les éléments caractéristiques recherchés sont choisis pour être indicatifs de la probabilité pour une image IN de montrer l'étiquette 100, et en particulier les informations textuelles sur lesquelles l'opérateur humain base l'identification ; il peuvent être un triplet de caractères 222 correspondant potentiellement à un code IATA d'aéroport, une ligne de caractère 226 correspondant potentiellement à un numéro de vol, une ligne de caractère 226 correspondant potentiellement à un numéro de vol à proximité d'un triplet 222 de caractères, une ligne de caractères 224 correspondant potentiellement à la date du vol, toute ligne de caractères ou tout graphisme usuellement présent sur une étiquette apposée sur un bagage dans un aéroport à des fins d'identification, une qualité de lecture automatique de ces éléments, un code-barres 220, ou une zone blanche 223 à proximité d'un triplet 222 de caractères correspondant potentiellement à un code IATA d'aéroport.

Les correspondances potentielles mentionnées ci-dessus sont à prendre dans le sens suivant : l'analyse logicielle de recherche peut identifier des caractères textuels et des lignes de ceux-ci en nombre, en types (tels que chiffres, lettres ou autres) et/ou en séquences correspondant à des informations textuelles se retrouvant usuellement sur l'étiquette, mais elle ne fait pas forcément correspondre ces éléments à des informations telles qu'un numéro de vol existant, cette interprétation des éléments identifiés étant confiée à l'opérateur humain dans le cadre du vidéo-codage.

Par exemple, une ligne comprenant deux lettres suivies de trois chiffres pourra être considérée comme correspondant potentiellement à un numéro de vol comme le numéro de vol 226 illustré par la figure 2A.

Sur la base d'un comptage des présences et des absences des éléments caractéristiques, l'unité informatique calcule alors un score pour chacune des images numériques au cours d'une étape S03, score pouvant par exemple être obtenu en affectant un indice positif à chaque élément caractéristique détecté, donc considéré comme présent sur l'image, un indice négatif à chaque élément caractéristique non détecté, et donc considéré comme absent sur l'image, puis en sommant les indices pour chaque image numérique, de sorte que les images numériques ayant les scores les plus élevés sont les plus susceptibles de montrer les informations textuelles de l'étiquette et donc d'être utiles à l'opérateur.

Le calcul du score peut être basé sur des règles de pondération déterminées empiriquement ou être effectué à partir d'un apprentissage automatique employant par exemple un réseau de neurones.

Le calcul du score peut également être directement obtenu par une analyse neuronale de l'image pixelique.

Le calcul du score peut également utiliser des informations récupérées dans une base de données, comme la base de données de bagages lorsque celle-ci est disponible ou une base de données de vols aériens, par exemple en augmentant l'indice affecté à une correspondance potentielle qui correspond effectivement à une donnée présente dans cette base de données.

A la suite de l'établissement des scores, l'unité informatique classe les images numériques IN en fonction de leurs scores respectifs au cours d'une étape S04 et affiche celles-ci sur un écran 132 en fonction de ce classement au cours d'une étape S05.

Dans ce document, la fonction d'affichage sur un écran ne se limite pas à un affichage par une unité d'affichage unique, mais inclut l'affichage sur une pluralité d'unités d'affichage physiquement distinctes, comme par exemple des moniteurs informatiques séparés.

En outre, l'affichage des images numériques ne se limite pas à un affichage intégral des images, mais inclut, par exemple, l'affichage d'une portion des images et/ou des images ayant subies un ou plusieurs traitements numériques tels qu'un agrandissement ou une modification de contraste.

Dans l'exemple de méthode de calcul des scores décrit plus haut où plus le score d'une image numérique est élevé plus la probabilité pour cette image de montrer des éléments utiles à l'opérateur est élevée, l'unité informatique peut opérer une sélection d'images ne retenant que les images ayant les scores les plus élevés et n'afficher à l'écran que les images numériques de la sélection, ou les afficher en priorité.

L'unité informatique peut afficher l'ensemble des images numériques de la sélection simultanément sur l'écran, par exemple quatre images comme illustré par Sel-1 sur la figure 1C.

Alternativement, l'unité informatique peut afficher à l'écran les images numériques de la sélection de manière séquentielle par ordre de scores décroissant des images numériques, comme illustré par Sel-2 sur la figure 1C, de manière à présenter en premier les images les plus susceptibles d'être utile à l'opérateur, qui peut manuellement contrôler le défilement des images à l'écran.

En complément ou à la place d'une image IN donnée, l'unité informatique peut également afficher à l'écran un agrandissement d'une zone d'intérêt ZI définie comme une région de cette image dans laquelle est présent au moins l'un des éléments caractéristiques indicatifs de la probabilité pour l'image de montrer l'étiquette.

A cette fin, l'unité informatique peut par exemple définir la zone d'intérêt comme une région de l'image d'une certaine dimension centrée sur au moins un des éléments caractéristiques de l'étiquette 100, comme illustré par la figure 2D sur laquelle une zone d'intérêt ZI est centrée sur le code barre 220 visible dans l'image numérique IN.

Au vu des images affichées, sélectionnées pour avoir une forte probabilité de contenir des informations utiles à l'opérateur humain Op de la figure 1B, celui-ci identifie les informations textuelles portées par l'étiquette et entre des données représentatives de celles-ci manuellement dans un système informatique via un terminal d'entrée 134 pouvant être par exemple un clavier, une tablette tactile ou un système vocal, au cours d'une étape S06 qui clôt le vidéo-codage.

Pour assister l'opérateur, l'unité informatique 135 peut en outre afficher à l'écran 132 des informations fournies par une base de données et susceptibles de correspondre au bagage dont les images sont affichées à l'écran, et de préférence des informations correspondant également aux premiers caractères entrés manuellement par l'opérateur.

Une première base de données susceptible de contenir des informations utiles au tri du bagage est la base de données 300 de bagages.

Alternativement, une base de données 310 de vols aériens peut fournir de telles informations.

Cette base de données 310 est locale à l'aéroport où se trouve le bagage à trier et liste les vols aériens à destination ou en partance de cet aéroport durant une période d'activité donnée, par exemple une ou plusieurs journées consécutives d'activité de l'aéroport qui comprennent en particulier le jour du tri du bagage selon l'invention, cette base de données de vols associant par exemple, pour chacun des vols, un code IATA d'aéroport et un numéro de vol composé d'un code de compagnie aérienne et d'un numéro de vol interne à la compagnie.

Puisque cette base de données 310 de vols est locale, elle offre de meilleures stabilité et disponibilité, et peut être connue bien plus à l'avance qu'une base de données 300 de bagages, et son emploi permet donc une fiabilité opérationnelle bien plus grande que l'emploi de la base de données de bagages.

Dans le procédé illustré par la figure 3C, la méthode prioritaire d'identification des bagages est la lecture automatique S10 des codes-barres sur les étiquettes 100 accrochées au bagage 110 pour association univoque de celui-ci à des données de la base de données 300 de bagages et dont des données représentatives sont transmises à l'unité de tri automatique 140 au cours d'une étape S12 pour que l'unité de tri automatique 140 commande le système de convoyage 101 de manière à orienter le bagage 110 de manière appropriée au cours d'une étape S14.

En cas d'échec N10 d'identification d'un bagage au moyen du code-barres de l'étiquette correspondante, par exemple en cas d'impossibilité de connexion à la base de données 300 de bagages ou de détérioration de l'étiquette, les images numériques IN peuvent être exploitées dans le cadre d'une analyse de reconnaissance optique de caractère S20, dite analyse OCR, automatisée.

Dans cette analyse OCR S20, l'unité informatique 135 peut comparer les chaines de caractères reconnus sur l'étiquette 100 aux informations de la base de données de vols 310 et, en cas de coïncidence, transmettre des données représentatives des informations de l'étiquette à l'unité de tri automatique 140 au cours d'une étape S22, de manière à ce que celle-ci commande le système de convoyage 101 de manière à orienter le bagage de manière appropriée au cours d'une étape S24.

En cas N20 d'absence de coïncidence ou d'indice de confiance trop faible dans l'analyse OCR S20, le vidéo-codage VCS défini par les étapes S01 à S06 précédemment décrites, est mis en œuvre, au cours duquel l'unité informatique 135 affiche à l'écran 132 des informations en provenance de la base de données de vols aériens 310 ou de la base de données 300 de bagages pour assister l'opérateur humain Op.

En réponse à la saisie par l'opérateur humain de données nécessaires au tri du bagage, les étapes S22 et S24 sont exécutées comme dans le cas de l'analyse OCR S20 et ce sans que toutes les images sélectionnées aient nécessairement été affichées.

Ainsi, le procédé de tri de bagages en aéroport avec vidéo-codage optimisé permet de répondre aux problématiques liées à la lecture d'informations présentes sur l'étiquette ainsi qu'aux problématiques liées à l'utilisation d'une base de données de bagages.

Il va de soi que la présente invention ne saurait être limitée au mode de réalisation tel qu'exposé plus haut, susceptible de subir des modifications sans pour autant sortir du cadre de l'invention, qui est défini par les revendications.

## Revendications

1. Procédé de tri de bagages dans un aéroport, comprenant une acquisition d'une pluralité d'images (IN) numériques d'un bagage (110) à partir de différents points de vue, ce bagage portant une étiquette (100) d'identification univoque indiquant des informations textuelles sur un vol aérien, le procédé comprenant un vidéo-codage (VCS) et étant **caractérisé en ce que,** dans le vidéo-codage, une unité informatique (135) détecte (S02) automatiquement la présence d'éléments caractéristiques (220, 222, 224, 226) de l'étiquette (100) d'identification univoque dans les images numériques du bagage, calcule (S03) un score pour chacune de ces images (IN) numériques sur la base d'un comptage des éléments caractéristiques détectés dans chaque image, classe (S04) les images numériques en fonction de leurs scores respectifs et affiche (S05) celles-ci sur un écran (132) en fonction de ce classement.

2. Le procédé de tri selon la revendication 1, **caractérisé en ce que** l'unité informatique opère une sélection des images sur la base de leurs scores respectifs et affiche sur écran en premier les images de la sélection à l'opérateur (Sel-1, Sel-2).

3. Le procédé de tri selon la revendication 2, **caractérisé en ce que** l'unité informatique affiche à l'écran les images de la sélection de manière simultanée (Sel-1).

4. Le procédé de tri selon la revendication 2, **caractérisé en ce que** l'unité informatique affiche à l'écran les images de la sélection de manière séquentielle (Sel-1) sur la base de leurs scores respectifs.

5. Le procédé de tri selon l'une quelconque des revendications 1 à 4, **caractérisé en ce que** l'unité informatique affiche à l'écran un agrandissement d'une zone d'intérêt (ZI) comprenant un élément caractéristique détecté dans une des images numériques.

6. Le procédé de tri selon l'une quelconque des revendications 1 à 5, **caractérisé en ce que** les éléments caractéristiques sont choisis parmi un code-barres (220), un code IATA d'aéroport (222), un numéro de vol (226) et une date d'un vol (224).

7. Le procédé de tri selon l'une quelconque des revendications 1 à 6, **caractérisé en ce qu'**on utilise des informations récupérées dans une base de données (300, 310) pour calculer les scores (S03).

8. Le procédé de tri selon l'une quelconque des revendications 1 à 7, **caractérisé en ce que** l'unité informatique affiche en outre à l'écran des informations récupérées dans une base de données (310) de vols aériens parmi lesquelles un opérateur choisit les informations qu'il entre dans l'unité informatique.

9. Le procédé de tri selon l'une quelconque des revendications 1 à 8, **caractérisé en ce que** l'unité informatique affiche en outre à l'écran des informations récupérées dans une base de données (300) de bagages parmi lesquelles un opérateur choisit les informations qu'il entre dans l'unité informatique.

## Patentansprüche

1. Sortierverfahren von Gepäckstücken in einem Flughafen, umfassend das Verschaffen einer Mehrzahl von digitalen Bildern (IN) eines Gepäckstücks (110) ausgehend von verschiedenen Blickpunkten, wobei dieses Gepäckstück ein eindeutiges Identifikations-Etikett (100) trägt, das Textinformationen über einen Flug anzeigt, wobei das Verfahren eine Videokodierung (VCS) umfasst und **dadurch gekennzeichnet ist, dass** in der Videokodierung eine Informatik-Einheit (135) automatisch die Gegenwart charakteristischer Elemente (220, 222, 224, 226) des eindeutigen Identifikations-Etiketts (100) in den digitalen Bildern des Gepäckstücks erfasst (S02), einen Punktewerte für jedes der digitalen Bilder (IN) auf der Grundlage einer Zählung der in jedem Bild erfassten charakteristischen Elemente berechnet (S03), die digitalen Bilder in Abhängigkeit von ihren jeweiligen Punktwerten klassifiziert (S04) und diese auf einem Bildschirm (132) in Abhängigkeit von dieser Klassifizierung anzeigt (S05).

2. Sortierverfahren nach Anspruch 1, **dadurch gekennzeichnet, dass** die Informatik-Einheit eine Selektion der Bilder auf der Grundlage ihrer jeweiligen Punktewerte vornimmt und auf dem Bildschirm als erstes die Bilder der Selektion einer Bedienperson (Sel-1, Sel-2) anzeigt.

3. Sortierverfahren nach Anspruch 2, **dadurch gekennzeichnet, dass** die Informatik-Einheit auf dem Bildschirm die Bilder der Selektion auf simultane Weise (Sel-1) anzeigt.

4. Sortierverfahren nach Anspruch 2, **dadurch gekennzeichnet, dass** die Informatik-Einheit auf dem Bildschirm die Bilder der Selektion auf sequenzielle Weise (Sel-1) auf der Grundlage ihrer jeweiligen Punktewerte anzeigt.

5. Sortierverfahren nach einem der Ansprüche 1 bis 4, **dadurch gekennzeichnet, dass** die Informatik-Einheit auf dem Bildschirm eine Vergrößerung einer interessierenden Zone (ZI), welche ein in den digitalen Bildern erfasstes charakteristisches Element umfasst, anzeigt.

6. Sortierverfahren nach einem der Ansprüche 1 bis 5, **dadurch gekennzeichnet, dass** die charakteristischen Elemente ausgewählt sind unter einem Barcode (220), einem IATA Flughafen-Code (222), einer Flugnummer (226) und einem Flugdatum (224).

7. Sortierverfahren nach einem der Ansprüche 1 bis 6, **dadurch gekennzeichnet, dass** aus einer Datenbank (300, 310) ausgelesene Informationen zum Berechnen der Punktewerte (S03) verwendet werden.

8. Sortierverfahren nach einem der Ansprüche 1 bis 7, **dadurch gekennzeichnet, dass** die Informatik-Einheit ferner aus einer Flüge-Datenbank (310) ausgelesene Informationen auf dem Bildschirm anzeigt, unter denen eine Bedienperson die Informationen auswählt, die in die Informatik-Einheit eingegeben werden.

9. Sortierverfahren nach einem der Ansprüche 1 bis 8, **dadurch gekennzeichnet, dass** die Informatik-Einheit ferner aus einer Gepäckstücke-Datenbank (300) ausgelesene Informationen auf dem Bildschirm anzeigt, unter denen eine Bedienperson die Informationen auswählt, die in die Informatik-Einheit eingegeben werden.

## Claims

1. A method of sorting baggage at an airport, which method comprises acquiring a plurality of digital images (IN) of a piece of baggage (110) that are taken from different viewpoints, which piece of baggage carries an unambiguous identification label (100) bearing textual information about a flight, the method further comprising video coding (VCS) and being **characterized in that**, in the video coding, a computer unit (135) automatically detects (S02) the presence of characteristic elements (220, 222, 224, 226) of the unambiguous identification label (100) in the digital images of the piece of baggage, computes (S03) a score for each of the digital images (IN) on the basis of a count of the characteristic elements detected in each image, ranks (S04) the digital images as a function of their respective scores, and displays (S05) said images on a screen (132) as a function of said ranking.

2. The sorting method according to claim 1, **characterized in that** the computer unit makes a selection of the images on the basis of their respective scores and displays the images of the selection (Sel-1, Sel-2) first on the screen to the operative.

3. The sorting method according to claim 2, **characterized in that** the computer unit displays the images of the selection (Sel-1) simultaneously on the screen.

4. The sorting method according to claim 2, **characterized in that** the computer unit displays the images of the selection (Sel-1) sequentially on the screen on the basis of their respective scores.

5. The sorting method according to any one of claims 1 to 4, **characterized in that** the computer unit displays on the screen an enlargement of a region of interest (ZI) including a characteristic element detected in one of the digital images.

6. The sorting method according to any one of claims 1 to 5, **characterized in that** the characteristic elements are chosen from among a bar code (220), an IATA airport code (222), a flight number (226), and a date of a flight (224) .

7. The sorting method according to any one of claims 1 to 6, **characterized in that** information that is retrieved from a database (300, 310) is used to compute the scores (S03) .

8. The sorting method according to any one of claims 1 to 7, **characterized in that** the computer unit also displays on the screen information retrieved from a flights database (310), from among which information an operative chooses the information that said operative enters into the computer unit.

9. The sorting method according to any one of claims 1 to 8, **characterized in that** the computer unit also displays on the screen information retrieved from a baggage database (300), from among which information an operative chooses the information that said operative enters into the computer unit.
